# FASCICULE DE BREVET EUROPEEN

(11) **EP 3 391 378 B1**
(45) Date de publication et mention de la délivrance du brevet: **26.05.2021**
(21) Numéro de dépôt: 16816647.8
(22) Date de dépôt: 15.12.2016
(51) Int. Cl.: G21C 7/24

(54) **GRAPPE ABSORBANTE ET CRAYON ABSORBANT POUR RÉACTEUR NUCLÉAIRE**
ABSORBERSTABANODNUNG UND ABSORBERSTAB FÜR KERNREAKTOR
ABSORBER ROD ASSEMBLY AND ABSORBER ROD FOR NUCLEAR REACTOR

(30) Priorité: 15.12.2015 FR 1562437
(43) Date de publication de la demande: 24.10.2018
(73) Titulaire: FRAMATOME, 92400 Courbevoie (FR)
(72) Inventeur: HERTZ, Dominique, 69110 Sainte-Foy-les-Lyon (FR); BOUFFIER, Marcel, 69970 Chaponnay (FR); GAUTHIER, Laurent, 69600 Oullins (FR)
(74) Mandataire: Lavoix
(86) Numéro de dépôt international: PCT/EP2016/081158
(87) Numéro de publication internationale: WO 2017/102928

(56) Documents cités:
- WO-A1-2013/079662
- FR-A1- 2 741 186
- US-A- 3 219 593
- US-A- 4 678 628

## Description

L'invention concerne le domaine des grappes absorbantes pour réacteur nucléaire à eau sous pression.

Les réacteurs nucléaires à eau sous pression (REP ou en anglais PWR pour « Pressurized Water Reactor ») comportent un cœur comprenant une pluralité d'assemblages de combustible nucléaire juxtaposés dans une cuve du réacteur.

Un assemblage de combustible nucléaire comprend un faisceau de crayons de combustible insérés dans une structure porteuse, la structure porteuse comprenant un embout inférieur et un embout supérieur entre lesquels sont disposés les crayons de combustible, des tubes-guides reliant l'embout inférieur et l'embout supérieur, et des grilles entretoises fixées sur les tubes-guides et réparties le long des tubes-guides entre les embouts supérieur et inférieur, les grilles entretoises maintenant les crayons de combustible.

Les tubes-guides ont pour fonction d'assurer la rigidité de la structure porteuse et de permettre l'insertion, dans l'assemblage de combustible nucléaire, de crayons absorbant les neutrons utilisés pour la modération de la réactivité du cœur du réacteur nucléaire.

Les crayons absorbants sont reliés entre eux, à leur extrémité supérieure, par un support. L'ensemble formé par le support et le faisceau de crayons absorbants portés par le support est appelé grappe absorbante. Le support présente généralement une forme en étoile, parfois désignée par le terme araignée, ou une forme ajourée sensiblement carrée appelée plaque support ou plateau.

Il est possible de prévoir des grappes absorbantes mobiles, aussi nommées grappes de commande ou grappes de réglage, qui sont suspendues chacune par son araignée respective à une tige de commande d'un mécanisme de commande de grappe du réacteur nucléaire, et mobiles verticalement pendant le fonctionnement normal du réacteur pour enfoncer plus ou moins leurs crayons absorbants dans les tubes-guides des assemblages de combustible nucléaire de façon à régler la réactivité du cœur du réacteur nucléaire.

Ces grappes de commande sont relevées pour augmenter la réactivité du cœur de réacteur nucléaire ou abaissées pour diminuer la réactivité du cœur du réacteur nucléaire.

Ces grappes de commande sont désolidarisées de la tige de commande de façon à enfoncer rapidement et complètement les crayons absorbants dans les assemblages de combustible nucléaire pour arrêter le réacteur nucléaire.

Il est possible de prévoir des grappes de commande de différents types, par exemple des grappes de commande très absorbantes, ou grappes noires, et des grappes de commande moins absorbantes, ou grappes grises, dans différentes zones du cœur du réacteur nucléaire. Les grappes absorbantes grises possèdent en général des crayons absorbants dont le pouvoir absorbant est adapté au niveau requis et des crayons inertes en général en acier.

Il est également possible de prévoir des grappes absorbantes fixes, dont les crayons portés par une plaque support restent insérés dans les assemblages de combustible nucléaire correspondant pendant le fonctionnement normal du réacteur nucléaire, dans des zones où l'on souhaite limiter la réactivité du cœur.

De telles grappes absorbantes fixes sont par exemple disposées dans des assemblages de combustible nucléaire situés en périphérie du cœur du réacteur nucléaire, pour diminuer l'activité neutronique et limiter l'irradiation de la cuve.

Les grappes absorbantes fixes possèdent des crayons absorbants dont le pouvoir absorbant est adapté au niveau requis et éventuellement des crayons inertes généralement sous la forme de barreaux courts en acier.

Qu'une grappe absorbante soit fixe ou mobile, ses crayons absorbants comprennent généralement une gaine tubulaire et une colonne absorbante formée d'un empilement d'éléments absorbants cylindriques réalisés en matériaux absorbants les neutrons. Les éléments absorbants sont généralement prévus sous la forme de pastilles cylindriques circulaires (ou « pellets » en anglais) de hauteur comprise entre 10 et 20 mm et de diamètre compris entre 7 et 9 mm, ou de tronçons de barre cylindriques (ou « bars » en anglais) de diamètre sensiblement identique à celui des pastilles dont la longueur peut atteindre plusieurs centimètres voire plusieurs mètres, c'est-à-dire la longueur totale de la colonne absorbante. Dans certains cas, un crayon absorbant peut être directement constitué d'une barre non gainée et réalisée en matériau absorbant.

La hauteur de la colonne absorbante des crayons absorbants des grappes absorbantes est a minima égale à celle de la colonne de matière fissile contenue dans les crayons de combustible pour permettre le recouvrement complet de la colonne fissile par la colonne absorbante des grappes absorbantes fixes et des grappes absorbantes mobiles lorsqu'elles sont totalement insérées dans le cœur du réacteur nucléaire.

Les crayons absorbants des grappes absorbantes fixes sont généralement constitués d'une gaine en acier contenant du borosilicate vitrifié sous forme de tube.

Il est possible d'utiliser des crayons absorbants gainés comprenant des éléments absorbants réalisés en argent-indium-cadmium (AIC), des éléments absorbants réalisés en titanate de dysprosium, des éléments absorbants réalisés en hafnate de dysprosium et/ou des éléments absorbants réalisés en carbure de bore (B₄C), ou des crayons absorbants non gainés à base d'hafnium pour les grappes absorbantes mobiles.

Il est possible notamment d'utiliser des crayons absorbants gainés contenant, dans leur partie inférieure, des éléments absorbants réalisés en argent-indium-cadmium (AIC) et, dans leur partie supérieure, des éléments absorbants réalisés en carbure de bore (B₄C).

Ceci permet de disposer, d'une part, d'une efficacité neutronique adaptée au fonctionnement normal du réacteur lorsque les grappes de commande sont peu ou pas insérées et à l'arrêt du réacteur grâce à une absorption neutronique supérieure dans la partie supérieure des crayons absorbants lorsque les grappes de commande sont totalement insérées et, d'autre part, d'une masse suffisante pour assurer une chute des grappes de commande dans les temps imposés par les règles de sûreté en cas d'arrêt d'urgence du réacteur nucléaire.

Cependant, les composants de l'AIC sont des matériaux rares (indium), toxiques (cadmium) ou conduisant à une activité radioactive importante après irradiation (argent). En outre, sous l'effet de l'irradiation, l'AIC gonfle et peut provoquer la déformation et la fissuration de la gaine.

Par ailleurs, le carbure de bore produit de l'hélium et du tritium gazeux sous irradiation. Le tritium migre dans le circuit primaire au travers des gaines en acier. A partir de 850°C le carbure de bore commence à réagir avec l'acier de la gaine. La réaction devient significative dès 1150°C, conduisant à une fragilisation de la gaine.

US4678628A divulgue une grappe de commande pour réacteur à eau sous pression, la grappe de commande présentant un pouvoir absorbant plus élevé en partie supérieure qu'en partie inférieure, les crayons de la grappe de commande contenant des empilements de pastilles réalisées en matériaux absorbants tels que B₄C, AIC et Hf, la variation de pouvoir absorbant étant obtenue en jouant sur la géométrie, la nature et/ou la densité des pastilles et leur répartition axiale dans les crayons absorbants

FR2741186 divulgue un crayon absorbant comprenant un empilement de groupes de pastilles identiques. L'enrichissement en B10 des pastilles du groupe supérieur est plus haut que celui-ci des pastilles du groupe inférieur.

Un des buts de l'invention est de proposer une grappe absorbante qui présente des caractéristiques d'absorption neutronique et de masse satisfaisantes, en évitant l'utilisation d'alliage d'argent-indium-cadmium et en limitant ou en évitant si possible l'utilisation de carbure de bore, et en utilisant des matériaux absorbants présentant peu voire pas de gonflement sous irradiation.

A cet effet, l'invention propose une grappe absorbante pour réacteur nucléaire à eau sous pression selon la revendication 1.

Des caractéristiques optionnelles sont définies aux revendications 2 à 18.

L'invention concerne également un crayon absorbant pour réacteur nucléaire à eau sous pression selon la revendication 19.

L'invention et ses avantages seront mieux compris à la lecture de la description qui va suivre, donnée uniquement à titre d'exemple, et faite en référence aux dessins annexés, sur lesquels :
- la figure 1 est une vue en perspective d'une grappe absorbante mobile, selon l'invention, pour réacteur nucléaire à eau sous pression partiellement insérée dans un assemblage de combustible nucléaire ;
- la figure 2 est une vue partielle en coupe axiale d'un crayon absorbant de la grappe de la figure 1; et
- les figures 3 à 5 sont des vues en coupe d'éléments absorbants pouvant être insérés dans le crayon de la figure 2.
- la figure 6 est une vue en perspective d'une grappe absorbante fixe selon l'invention.

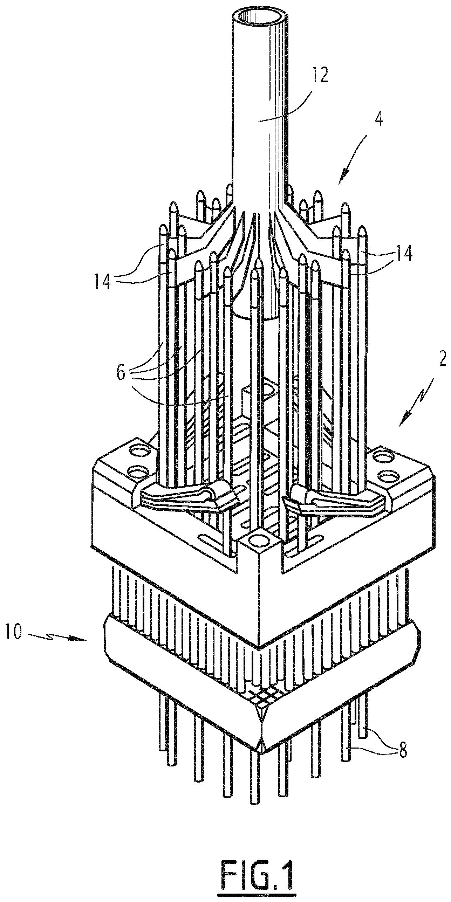

La grappe absorbante 2 représentée sur la figure 1 comporte un support 4 et un faisceau de crayons absorbants 6 portés par le support 4.

Le support 4 assure le maintien des crayons absorbants 6 sous la forme d'un faisceau, dans lequel les crayons absorbants 6 sont parallèles entre eux et positionnés de façon à pouvoir s'insérer dans des tubes-guides 8 d'un assemblage de combustible nucléaire 10.

En fonctionnement, les crayons absorbants 6 s'étendent sensiblement verticalement. Par la suite, les termes « vertical » et « hauteur » s'entendent par rapport à la direction d'extension verticale des crayons absorbants 6.

Le support 4 de la grappe absorbante 2 de la figure 1 présente une forme en étoile. Il comprend un pommeau 12 central à partir duquel des bras 14, appelés généralement ailettes, s'étendent en étoile. Chaque bras 14 porte un ou plusieurs crayon(s) absorbant(s) 6.

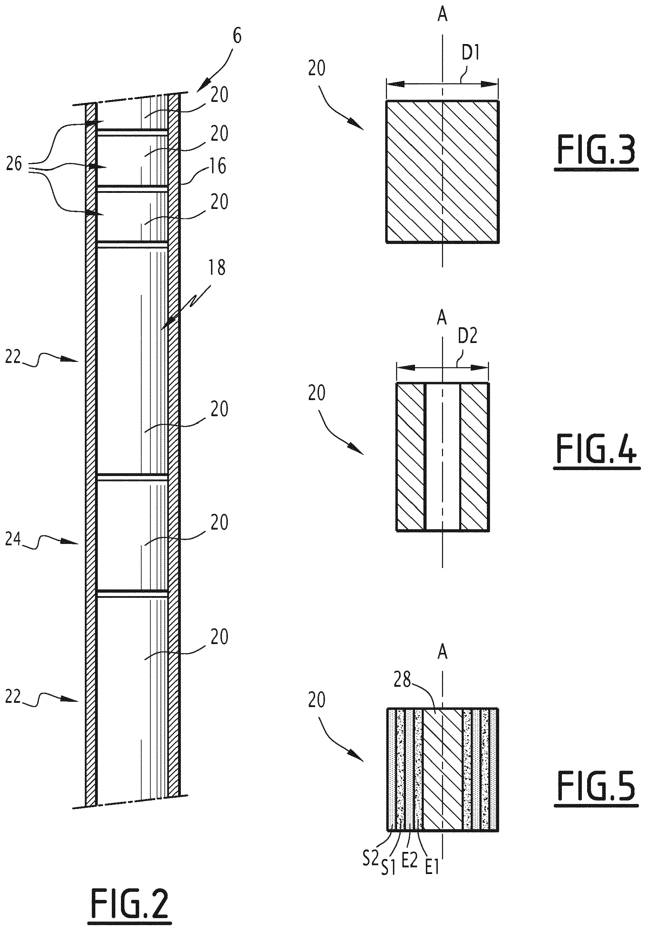

Comme illustré sur la figure 2, chaque crayon absorbant 6 comprend une gaine tubulaire 16 et une colonne absorbante 18 reçue à l'intérieur de la gaine tubulaire 16.

La colonne absorbante 18 est formée d'un empilement d'éléments absorbants 20 réalisés en matériaux absorbant les neutrons. Les éléments absorbants 20 sont empilés verticalement dans la gaine tubulaire 16.

Chaque élément absorbant 20 présente une forme cylindrique circulaire et s'étend suivant un axe longitudinal A. L'axe longitudinal A est sensiblement vertical lorsque l'élément absorbant 20 est reçu dans la gaine tubulaire 16.

Les éléments absorbants 20 présentent la forme de pastilles cylindriques ou de tronçons de barre cylindriques ou « bars ». De préférence les éléments absorbants 20 sont des pastilles cylindriques circulaires ou « pellets ».

Chaque élément absorbant 20 possède une hauteur prise suivant son axe longitudinal A.

Chaque élément absorbant 20 présente une section transversale prise perpendiculairement à l'axe longitudinal A de l'élément absorbant 20.

La section transversale présente une forme géométrique déterminée. La section transversale est par exemple tubulaire ou pleine. La section transversale est caractérisée notamment par un diamètre externe et, le cas échéant, un diamètre interne.

Chaque élément absorbant 20 comprend au moins une couche. Chaque élément absorbant 20 comprend une seule couche ou plusieurs couches concentriques centrées sur l'axe longitudinal A. Le nombre de couches et l'épaisseur des couches déterminent aussi la géométrie de la section transversale de l'élément absorbant 20.

Deux couches distinctes d'un élément absorbant 20 diffèrent par leur composition (i.e. les matériaux ou les combinaisons de matériaux constituant ces couches) et/ou par le taux de porosité de ces couches.

Chaque élément absorbant 20 est réalisé à partir d'un seul matériau ou d'une seule combinaison de matériaux distincts. Des matériaux distincts sont disposés dans des couches distinctes ou mêlés dans une même couche.

Chaque élément absorbant 20 possède une structure en section transversale déterminée par la géométrie de la section transversale (plein, tubulaire, diamètre externe, diamètre interne, nombre de couches, épaisseur de chaque couche,...), la composition (matériau ou combinaison de matériaux constituant chaque couche) et le taux de porosité (taux de porosité de chaque couche).

Deux éléments absorbants 20 possèdent des structures en section transversale identiques si ces structures en section transversale présentent la même géométrie en section transversale, la même composition et le même taux de porosité, et ce pour chaque couche si l'élément absorbant 20 comprend plusieurs couches.

Deux éléments absorbants 20 possèdent des structures en section transversale différentes s'ils diffèrent par au moins un parmi la géométrie en section transversale, la composition et/ou le taux de porosité, et ce pour au moins une couche si l'élément absorbant 20 comprend plusieurs couches.

Les colonnes absorbantes 18 de la grappe absorbante 2 contiennent au moins deux ensembles absorbants 22, 24, 26, chaque ensemble absorbant 22, 24, 26 étant constitué d'une pluralité d'éléments absorbants 20 possédant la même structure en section transversale.

Des éléments absorbants 20 d'un même ensemble absorbant 22, 24, 26 possèdent la même structure en section transversale mais peuvent éventuellement présenter des hauteurs différentes. Des éléments absorbants 20 d'un même ensemble absorbant sont identiques ou diffèrent uniquement par leur hauteur.

La colonne absorbante 18 comprend au moins un premier ensemble absorbant 22 et un deuxième ensemble absorbant 24.

Les éléments absorbants 20 du premier ensemble absorbant 22 sont réalisés à partir d'un même matériau ou d'une même combinaison de matériaux choisi(s) parmi le groupe de matériaux absorbant les neutrons constitué d'un premier hafnate d'europium, d'un deuxième hafnate d'europium, d'un premier hafnate de samarium, d'un deuxième hafnate de samarium, de carbure d'hafnium et d'hexaborure de samarium.

Les éléments absorbants 20 du deuxième ensemble absorbant 24 sont également réalisés à partir d'un même matériau ou d'une même combinaison de matériaux choisi(s) parmi le groupe de matériaux absorbant les neutrons constitué d'un premier hafnate d'europium, d'un deuxième hafnate d'europium, d'un premier hafnate de samarium, d'un deuxième hafnate de samarium, de carbure d'hafnium et d'hexaborure de samarium.

Les éléments absorbants 20 du premier ensemble absorbant 22 diffèrent de ceux du deuxième ensemble absorbant 24 par leur structure en section transversale, i.e. au moins par un parmi la géométrie en section transversale, une composition et/ou un taux de porosité.

L'expression « élément absorbant 20 réalisé à partir d'une combinaison de matériaux » signifie de manière générale qu'un élément absorbant 20 comprend plusieurs matériaux mêlés ou mélangés dans une même couche de l'élément absorbant 20 et/ou séparés dans des couches distinctes de l'élément absorbant 20, réalisées par exemple dans des matériaux absorbants différents.

Les expressions « identique », « même matériau » ou « même combinaison de matériaux », « même structure en section transversale », « même géométrie en section transversale » et « même taux de porosité » s'étendent ici aux inévitables tolérances de fabrication ou de mesure près.

L'expression « les colonnes absorbantes 18 contiennent au moins deux ensembles absorbants 22, 24, 26 » signifie ici que les ensembles absorbants 22, 24, 26 sont présents dans les colonnes absorbantes 18 de la grappe absorbante 2 considérées dans leur ensemble.

Chaque ensemble absorbant 22, 24, 26 comprend plusieurs éléments absorbants 20 disposés dans une même colonne absorbante 18 et/ou plusieurs éléments absorbants 20 répartis dans plusieurs colonnes absorbantes 18 de la grappe absorbante 2.

Il est possible que les éléments absorbants 20 de deux ensembles absorbants 22, 24, 26 soient contenus dans des colonnes absorbantes 18 respectives différentes et/ou que les éléments absorbants 20 de deux ensembles absorbants 22, 24, 26 soient contenus dans une même colonne absorbante 18.

Les expressions « premier hafnate d'europium » et « deuxième hafnate d'europium » désignent deux composés définis, formés par exemple par une réaction entre l'oxyde d'hafnium (HfO₂) et l'oxyde d'europium (Eu₂O₃), possédant des compositions différentes, et en particulier des teneurs molaires en europium situées dans des gammes disjointes.

Pour mémoire, un « composé défini » est un composé dont le changement de phase se fait à température constante. Sur un diagramme de phase, une verticale indique la présence d'un composé défini.

De préférence, le premier hafnate d'europium a une teneur molaire en oxyde d'europium comprise entre 43% et 54% et le deuxième hafnate d'europium a une teneur molaire en oxyde d'europium comprise entre 19% à 26%. Ces deux matériaux présentent des capacités d'absorption et des masses volumiques différentes. Dans ces deux gammes, il est possible d'obtenir de l'hafnate d'europium en phase cristalline cubique qui présente l'avantage de ne pas ou peu gonfler sous irradiation.

L'hafnate d'europium, sous forme de pastilles frittées de mêmes dimensions, est un peu plus absorbant et environ 4 fois plus dense que le carbure de bore.

L'hafnate d'europium ne génère pas de produit d'irradiation gazeux, ne réagit pas avec l'acier inoxydable jusqu'à au moins 1300°C, ordre de grandeur de la température de fusion de l'acier, et ne provoque pas de réaction exothermique avec l'eau.

Les expressions « premier hafnate de samarium » et « deuxième hafnate de samarium » désignent deux composés définis, formés par exemple par une réaction entre l'oxyde d'hafnium (HfO₂) et l'oxyde de samarium (Sm₂O₃), possédant des compositions différentes, et en particulier des teneurs molaires en samarium situées dans des gammes disjointes.

De préférence, le premier hafnate de samarium a une teneur molaire en oxyde de samarium comprise entre 8% et 20% et le deuxième hafnate de samarium a une teneur molaire en oxyde de samarium comprise entre 50% et 60%. Dans ces deux gammes, il est possible d'obtenir de l'hafnate de samarium en phase cristalline cubique qui présente l'avantage de ne pas ou peu gonfler sous irradiation.

L'hafnate de samarium ne génère pas de produit d'irradiation gazeux, ne réagit pas avec l'acier inoxydable jusqu'à au moins 1300°C, ne provoque pas de réaction exothermique avec l'eau. Sous forme d'empilement de pastilles frittées de mêmes dimensions que le ou les barreaux d'AIC, l'hafnate de samarium est moins dense que l'AIC : la masse volumique théorique de l'hafnate de samarium est inférieure d'environ 20% à celle de l'AIC.

Sous forme de pastilles frittées de mêmes dimensions, le premier hafnate de samarium absorbe un peu moins les neutrons que l'AIC, alors que le deuxième hafnate de samarium absorbe un peu plus les neutrons que l'AIC, l'écart d'absorption étant de l'ordre de 10% à chaque fois.

Le premier hafnate de samarium, le deuxième hafnate de samarium, le premier hafnate d'europium et le deuxième hafnate d'europium étant miscibles entre eux et présentant des conditions de frittage voisines, deux ou plus de ces matériaux absorbants peuvent être mêlés dans un même élément absorbant 20 fritté.

A géométrie équivalente, le carbure d'hafnium (HfC) est un peu moins absorbant que l'AIC, de l'ordre de 5%. La masse volumique théorique du carbure d'hafnium est environ 20% supérieure à celle de l'AIC.

Le carbure d'hafnium ne génère pas de produit d'irradiation gazeux, ne réagit pas avec une gaine en acier inoxydable à moins de 1300°C, ne provoque pas de réaction exothermique avec l'eau et est naturellement en phase cubique.

Sous forme de pastilles frittées de mêmes dimensions, l'hexaborure de samarium (SmB₆) est un peu plus absorbant et trois fois plus dense que le carbure de bore et est naturellement en phase cubique.

Dans un mode de réalisation, les pastilles sont obtenues par frittage de poudre avec, si nécessaire, ajout d'un agent porogène pour ajuster le taux de porosité et/ou d'un additif de frittage. Le frittage est réalisé en continu ou par lots (en anglais « batch ») à une température comprise entre 1400°C et 1700°C sous air pour les hafnate d'europium ou de samarium et sous vide ou sous gaz neutre pour l'hexaborure de samarium. Le frittage est réalisé par lots à une température comprise entre 1900°C et 2200°C, sous vide, pour le carbure d'hafnium, soit à partir d'une poudre broyée finement (cristallites < 50 µm, de préférence < 20 µm), soit en ajoutant 1 à 2% de MoSi₂ pour assurer le frittage du carbure d'hafnium.

Dans un mode de réalisation, les colonnes absorbantes 18 de la grappe absorbante 2 contiennent un premier ensemble absorbant 22 et un deuxième ensemble absorbant 24 différents dont les éléments absorbants 20 diffèrent par leurs compositions, i.e. par leurs matériaux ou combinaisons de matériaux choisis parmi le groupe de matériaux.

Le premier ensemble absorbant 22 et le deuxième ensemble absorbant 24 sont contenus dans une ou plusieurs colonne(s) absorbante(s) 18.

Il est possible de disposer le premier ensemble absorbant 22 et le deuxième ensemble absorbants 24 dans des colonnes absorbantes 18 respectives ou de disposer le premier ensemble absorbant 22 et le deuxième ensemble absorbant 24 différents dans au moins une même colonne absorbante 18.

Il est possible de prévoir au moins une colonne absorbante 18 comprenant des éléments absorbants du premier ensemble absorbant 22 et du deuxième ensemble absorbant 24.

Il est aussi possible de prévoir au moins deux colonnes absorbantes 18 comprenant chacune les éléments absorbants 20 d'un seul parmi le premier ensemble absorbant 22 et le deuxième ensemble absorbant 24.

Dans un mode de réalisation, les éléments absorbants 20 du premier ensemble absorbant 22 sont réalisés, parmi le groupe de matériaux, exclusivement en premier hafnate de samarium, premier hafnate d'europium, deuxième hafnate de samarium et/ou deuxième hafnate d'europium, et les éléments absorbants 20 du deuxième ensemble absorbant 24 sont réalisés exclusivement en carbure d'hafnium.

Dans un mode de réalisation, une grappe absorbante 2 comprend une colonne absorbante 18 contenant seulement des éléments absorbants 20 du premier ensemble absorbant 22, réalisés, parmi le groupe de matériaux, exclusivement en premier hafnate de samarium, premier hafnate d'europium, deuxième hafnate de samarium et/ou deuxième hafnate d'europium, et une autre colonne absorbante 18 contenant seulement des éléments absorbants 20 du deuxième ensemble absorbant 24, réalisés, parmi le groupe de matériaux, exclusivement en carbure d'hafnium.

La disposition des éléments absorbants 20 du premier ensemble absorbant 22 et des éléments absorbants 20 du deuxième ensemble absorbant 24 dans deux colonnes distinctes facilite la fabrication.

Ces deux colonnes absorbantes 18 sont de préférence celles de deux crayons absorbants 6 adjacents de la grappe absorbante 2, de façon à obtenir une absorption neutronique sensiblement équivalente à celle de deux colonnes absorbantes identiques contenant de l'AIC.

De manière générale, les éléments absorbants 20 du premier ensemble absorbant 22 et des éléments absorbants 20 du deuxième ensemble absorbant 24 sont disposés dans des crayons absorbants 6 distincts et adjacents deux à deux. Chaque crayon absorbant 6 contenant les éléments absorbants 20 du premier ensemble absorbant 22 est adjacent d'un crayon absorbant 6 contenant les éléments absorbants 20 du deuxième ensemble absorbant 24.En variante ou en option, au moins une colonne absorbante 18 contient, d'une part, des éléments absorbants 20 du premier ensemble absorbant 22, c'est-à-dire réalisés, parmi le groupe de matériaux, exclusivement en premier hafnate de samarium, premier hafnate d'europium, deuxième hafnate de samarium et/ou deuxième hafnate samarium d'europium, et, d'autre part, des éléments absorbants 20 du deuxième ensemble absorbant 24, réalisés, parmi le groupe de matériaux, exclusivement en carbure d'hafnium.

Dans un mode de réalisation, dans une telle colonne absorbante 18, les éléments absorbants 20 du premier ensemble absorbant 22 et les éléments absorbants 20 du deuxième ensemble absorbant 24 sont répartis le long de la colonne absorbante 18.

Dans ce cas, de préférence, les éléments absorbants 20 du premier ensemble absorbant 22 et les éléments absorbants 20 du deuxième ensemble absorbant 24 sont répartis dans la colonne absorbante 18 selon un motif répété.

Différents motifs répétés des éléments absorbants 20 du premier ensemble absorbant 22 et des éléments absorbants 20 du deuxième ensemble absorbant 24 sont envisageables. De préférence, les motifs répétés sont choisis de façon à obtenir une absorption neutronique linéique moyenne souhaitée sur l'ensemble de la longueur de la colonne absorbante 18.

Ce mode de réalisation peut ainsi être utilisé pour remplacer l'AIC dans les réacteurs nucléaires existants avec une absorption neutronique et une masse sensiblement équivalentes à ceux de l'AIC, par exemple en combinant, dans des proportions adaptées, du deuxième hafnate de samarium (éléments absorbants du premier ensemble absorbant 22) et du carbure d'hafnium (éléments absorbants du deuxième ensemble absorbant 24), du fait que le deuxième hafnate de samarium est plus absorbant mais moins dense que alors que le carbure d'hafnium est moins absorbant mais plus dense que l'AIC.

Pour de nouveaux réacteurs nucléaires, l'ajustement des proportions de chaque matériau absorbant permet d'obtenir une colonne absorbante 18 de masse et absorption adaptée au besoin défini par le concepteur du réacteur.

Dans un mode de réalisation, et comme illustré sur la figure 2, outre le premier ensemble absorbant 22 formé d'éléments absorbants 20 réalisés par exemple exclusivement en premier hafnate de samarium, premier hafnate d'europium, deuxième hafnate de samarium et/ou deuxième hafnate d'europium, et le deuxième ensemble absorbant 24 formé d'éléments absorbants 20 réalisés par exemple exclusivement en carbure d'hafnium, les colonnes absorbantes 18 contiennent un troisième ensemble absorbant 26 formé d'éléments absorbants 20 réalisés par exemple exclusivement en carbure de bore.

Une telle grappe absorbante 2 permet par exemple de remplacer, dans les réacteurs nucléaires existants, une grappe absorbante dont les colonnes absorbantes contiennent de et du carbure de bore, étant remplacé par la combinaison d'éléments absorbants réalisés en premier hafnate de samarium, premier hafnate d'europium, deuxième hafnate de samarium et/ou deuxième hafnate d'europium et d'éléments absorbants réalisés en carbure d'hafnium, et le carbure de bore étant conservé.

Dans une colonne absorbante 18 contenant des éléments absorbants 20 réalisés en premier hafnate de samarium, premier hafnate d'europium, deuxième hafnate de samarium et/ou deuxième hafnate d'europium (éléments absorbants 20 du premier ensemble absorbant 22) et/ou des éléments absorbants 20 réalisés en carbure d'hafnium (éléments absorbants 20 du deuxième ensemble absorbant 24) et des éléments absorbants 20 réalisés en carbure de bore (éléments absorbants 20 du troisième ensemble absorbant 26), de préférence, les éléments absorbants 20 du premier ensemble absorbant 22 et/ou les éléments absorbants 20 du deuxième ensemble absorbant 24 sont disposés dans la partie inférieure de la colonne absorbante 18, tandis que les éléments absorbants 20 du troisième ensemble absorbant 26 sont disposés dans la partie supérieure de la colonne absorbante 18.

Dans un mode de réalisation, la grappe absorbante 2 comprend une colonne absorbante 18 comprenant des éléments absorbants 20 du premier ensemble absorbant 22 en partie inférieure et des éléments absorbants 20 du troisième ensemble absorbant 24 en partie supérieure et une autre colonne absorbante 18 contenant des éléments absorbants 20 du deuxième ensemble absorbant 24 en partie inférieure et des éléments absorbants 20 du troisième élément absorbant 26 en partie supérieure.

Ces deux colonnes absorbantes 18 sont de préférence celles de deux crayons absorbants 6 adjacents de la grappe absorbante 2.

L'hexaborure de samarium peut avantageusement être utilisé pour remplacer le carbure de bore dans le troisième ensemble absorbant 26 afin de bénéficier d'une masse de grappe plus élevée pour un pouvoir absorbant au moins égal.

Ainsi, dans les différents modes de réalisation indiqués ci-dessus, tout ou partie du carbure de bore peut être remplacé par de l'hexaborure de samarium.

En variante, du premier hafnate d'europium, du deuxième hafnate d'europium ou une combinaison de premier hafnate d'europium et de deuxième hafnate d'europium de composition adéquate pour obtenir la masse et le pouvoir absorbant visés, peut être utilisé pour remplacer tout ou partie du carbure de bore dans les éléments absorbants 20 du troisième ensemble absorbant 26.

En particulier, dans un mode de réalisation, les colonnes absorbantes 18 de la grappe absorbante 2 comprennent des éléments absorbants 20 du premier ensemble absorbant 22 réalisés en premier hafnate de samarium, en premier hafnate d'europium, en deuxième hafnate de samarium et/ou en deuxième hafnate d'europium, et des éléments absorbants 20 du deuxième ensemble absorbant 24 réalisés en carbure d'hafnium, les éléments absorbants 20 du premier ensemble absorbant 22 et du deuxième ensemble absorbant 24 étant situés en partie inférieure des colonnes absorbantes 18, et un troisième ensemble absorbant 26 situé en partie supérieure des colonnes absorbantes 18 et constitué d'éléments absorbants 20 réalisés en carbure de bore, en hexaborure de samarium ou en un matériau ou une combinaison de matériaux choisis parmi le premier hafnate d'europium et le deuxième hafnate d'europium.

Le premier hafnate de samarium, le deuxième hafnate de samarium, le premier hafnate d'europium et le deuxième hafnate d'europium présentent des capacités d'absorption différentes et des masses volumiques différentes. Leur combinaison permet ainsi d'obtenir un compromis satisfaisant entre l'absorption neutronique et la masse de la grappe absorbante 2 dans son ensemble, cette dernière devant être suffisante dans le cas d'une grappe de commande pour assurer la chute de la grappe de commande dans les temps imposés par les règles de sûreté en cas d'arrêt d'urgence du réacteur nucléaire.

Dans un mode de réalisation, une grappe absorbante 2 comprend un premier ensemble absorbant 22 dont les éléments absorbants 20 sont réalisés exclusivement en carbure d'hafnium et un deuxième ensemble absorbant 24 dont les éléments absorbants 20 sont réalisés en premier hafnate de samarium, en deuxième hafnate de samarium, en premier hafnate d'europium et/ou en deuxième hafnate d'europium. Les éléments absorbants 20 du premier ensemble absorbant 22 et ceux du deuxième ensemble absorbant 24 sont soit mélangés dans les crayons absorbants 6 soit répartis dans des crayons absorbants 6 distincts de la grappe absorbante 2. En option, la grappe absorbante 2 comprend en outre un troisième ensemble absorbant 26 dont les éléments absorbants 20 sont réalisés soit en hexaborure de samarium soit en premier hafnate d'europium et/ou en deuxième hafnate d'europium, les éléments absorbants 20 du troisième ensemble absorbant 26 étant disposés dans la partie supérieure de chaque crayon absorbant 6 de la grappe absorbante 2.

Afin d'ajuster l'absorption neutronique et/ou la masse des différents crayons absorbants 6 de la grappe absorbante 2, il est possible d'adapter les structures en section transversale des éléments absorbants 20 en modifiant la géométrie de la section transversale des éléments absorbants 20 et/ou le taux de porosité du matériau absorbant afin de modifier la densité du matériau absorbant constitutif des éléments absorbants 20 par rapport à la densité théorique dudit matériau.

Il est également possible de prévoir des ensembles absorbants 22, 24, 26 constitués d'éléments absorbants 20 réalisés en un même matériau ou une même combinaison de matériaux du groupe de matériaux, mais dont les structures en section transversale présentent des géométries différentes et/ou des taux de porosité (et donc des densités) différents, de sorte que les éléments absorbants 20 d'un ensemble absorbant, bien que réalisés en un même matériau ou une même combinaison de matériaux du groupe de matériaux, possèdent une capacité d'absorption neutronique et/ou une masse différente(s) de celle(s) des éléments absorbants 20 d'un autre ensemble absorbant.

Dans un élément absorbant 20, les neutrons sont d'abord absorbés par la zone périphérique de l'élément absorbant, puis progressivement par les zones intermédiaires jusqu'à atteindre la zone centrale.

Dans un mode de réalisation les éléments absorbants 20 d'un premier ensemble absorbant 22 sont cylindriques pleins, comme illustré sur la figure 3, et les éléments absorbants 20 d'un deuxième ensemble absorbant 24 sont cylindriques tubulaires, comme illustré sur la figure 4. Dans une variante de réalisation les éléments absorbants 20 dudit premier ensemble absorbant 22 et ceux dudit deuxième ensemble absorbant 24 sont réalisés à partir du même matériau ou de la même combinaison de matériaux.

En variante ou en option, les éléments absorbants 20 du premier ensemble absorbant 22 possèdent un diamètre externe D1 strictement supérieur à celui D2 des éléments absorbants 20 du deuxième ensemble absorbant 24, comme illustré sur les figures 3 et 4.

Dans un mode de réalisation, au moins un ensemble absorbant comprend des éléments absorbants 20 contenant au moins deux matériaux parmi le groupe de matériaux.

Dans un mode de réalisation, au moins un ensemble absorbant comprend des éléments absorbants 20 contenant en combinaison le premier hafnate d'europium et le deuxième hafnate d'europium ou contenant en combinaison le premier hafnate de samarium et le deuxième hafnate de samarium.

Dans un mode de réalisation, au moins un ensemble absorbant comprend des éléments absorbants 20 contenant en combinaison au moins deux hafnates choisis parmi le premier hafnate d'europium, le deuxième hafnate d'europium, le premier hafnate de samarium et le deuxième hafnate de samarium.

Différents modes de réalisation peuvent être mis en œuvre pour obtenir un tel élément absorbant 20.

Dans un mode de réalisation, l'élément absorbant 20 est homogène et obtenu par frittage sous forme d'une pastille pleine ou tubulaire d'un mélange dans les proportions voulues de différentes poudres de hafnate.

Comme illustré sur la figure 5, dans un mode de réalisation, l'élément absorbant 20 comprend par exemple au moins deux couches superposées constituées d'hafnates différents choisis parmi le premier hafnate d'europium, le deuxième hafnate d'europium, le premier hafnate de samarium et le deuxième hafnate de samarium.

Dans l'exemple illustré sur la figure 5, l'élément absorbant 20 comprend une couche réalisée en premier hafnate d'europium E1 disposée sur une âme 28 cylindrique , une couche réalisée en deuxième hafnate d'europium E2, une couche réalisée en premier hafnate de samarium S1 et une couche réalisée en deuxième hafnate de samarium S2. Les couches sont ici concentriques centrées sur l'axe A de l'élément absorbant 20 en forme de pastille cylindrique.

Les couches E1, E2, S1 et/ou S2 sont par exemple déposées successivement sur l'âme 28 cylindrique, par exemple par dépôt en phase vapeur ou par fabrication additive. L'âme 22 est par exemple réalisée en matériau absorbant (HfO2, HfC, ..) ou non absorbant (ZrO2, C,...).

Dans une variante, un élément absorbant 20 est prévu sous la forme d'une pastille cylindrique tubulaire constitué d'au moins deux couches superposées constituées d'hafnates différents choisis parmi le premier hafnate d'europium, le deuxième hafnate d'europium, le premier hafnate de samarium et le deuxième hafnate de samarium, sans âme centrale. Les couches d'un tel élément absorbant 20 sont formées par exemple par fabrication additive, éventuellement sur une âme fusible ou sacrificielle qui est ensuite retirée.

La géométrie en section transversale (diamètre intérieur, diamètre extérieur, nombre de couches, épaisseur de chaque couche), et le taux de porosité (densité) et la composition (matériau ou combinaison de matériaux) des couches successives sont adaptées pour obtenir la masse et l'absorption neutronique requises pour la grappe pendant toute sa durée de vie.

La gaine tubulaire 16 des crayons absorbants 6 est de préférence une gaine en acier inoxydable, par exemple une gaine en AISI 304 ou AISI 316L, ou une gaine à base d'hafnium.

La grappe absorbante 2 illustrée sur la figure 1 est une grappe absorbante mobile, ou grappe de commande ou de réglage, qui est mobile verticalement pendant le fonctionnement normal du réacteur pour enfoncer plus ou moins ses crayons absorbants 6 dans l'assemblage de combustible nucléaire 10 de façon à régler la réactivité du cœur du réacteur nucléaire. Pour les positions dans le cœur du réacteur nécessitant un plus faible pouvoir absorbant, certains des crayons absorbants de la grappe 2 peuvent être remplacés par des crayons en acier.

En variante, la grappe absorbante 2 est une grappe absorbante fixe, dont les crayons absorbants 6 restent enfoncés en permanence dans l'assemblage de combustible nucléaire 10 pendant le fonctionnement normal du réacteur nucléaire, l'assemblage de combustible nucléaire 10 étant par exemple situé en périphérie du cœur du réacteur nucléaire.

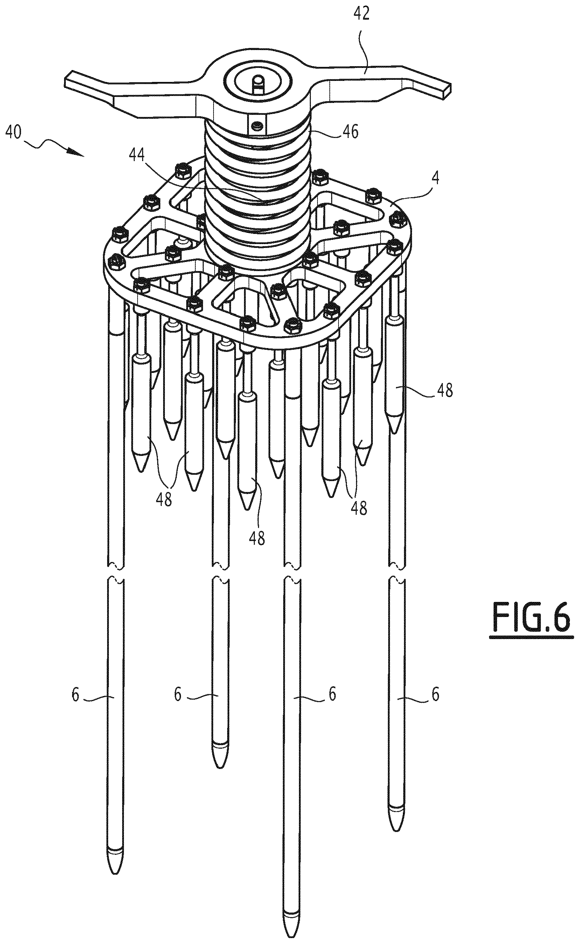

Une telle grappe absorbante 2 fixe est illustrée sur la figure 6. Elle comprend des crayons absorbants 6 portés par un support 4 sous la forme d'une plaque support. Elle comprend également un ensemble pousseur 40 comprenant une barre d'appui 42 et deux ressorts 44, 46 hélicoïdaux coaxiaux interposés entre le support 4 et la barre d'appui 42. Les ressorts 44, 46 sont prévus pour pousser le support 4 vers le bas en prenant appui sur la barre d'appui 42, celle-ci prenant appui sur la plaque supérieure de cœur du réacteur nucléaire.

Le nombre de crayons absorbants 6, la longueur de la colonne absorbante 18 et la nature du matériau absorbant (absorbant ou combinaison d'absorbants du groupe de matériaux) sont adaptés pour obtenir l'absorption neutronique visée à l'endroit voulu. Les autres crayons de la grappe absorbante fixe sont par exemple des crayons courts en acier appelés crayons bouchons 48. La grappe absorbante 2 illustrée sur la figure 6 comprend des crayons absorbants 6 et des crayons bouchons 48.

Grâce à l'invention, il est possible de disposer de crayons absorbants 6 possédant une capacité d'absorption de neutrons satisfaisante, au moins égale à celle d'un crayon absorbant utilisant de l'AIC et/ou du carbure de bore, tout en obtenant une grappe absorbante 2 mobile présentant une masse comparable afin d'assurer la chute de la grappe mobile dans les mêmes conditions.

Par ailleurs, les matériaux absorbants du groupe de matériaux permettent d'obtenir des performances plus intéressantes, notamment dans le cas d'incidents et d'accident dans les réacteurs ou en fabrication en usine.

En effet, ces matériaux, à l'exception de l'hexaborure de samarium (SmB6), ne produisent pas de produits d'irradiation gazeux, ne réagissent pas avec la gaine en acier inoxydable jusqu'à des températures élevées et ne réalisent pas de réaction exothermique avec l'eau en cas de perte d'étanchéité d'un crayon absorbant.

## Revendications

1. Grappe absorbante (2) pour réacteur nucléaire à eau sous pression, comprenant un faisceau de crayons absorbants (6), chaque crayon absorbant (6) comprenant une gaine tubulaire (16) et une colonne absorbante (18) formée d'un empilement d'éléments absorbant les neutrons (20) reçus à l'intérieur de la gaine tubulaire (16), chaque élément absorbant (20) s'étendant suivant un axe longitudinal (A) et présentant une structure en section transversale déterminée par la géométrie en section transversale, la composition et le taux de porosité de l'élément absorbant (20), les colonnes absorbantes (18) contenant au moins deux ensembles absorbants (22, 24, 26), chaque ensemble absorbant (22, 24, 26) étant constitué d'une pluralité d'éléments absorbants (20) ayant la même structure en section transversale, la grappe comprenant au moins un premier ensemble absorbant (22) et un deuxième ensemble absorbant (24), les éléments absorbants (20) du premier ensemble absorbant (22) ayant une structure en section transversale différente de celle des éléments absorbants (20) du deuxième ensemble absorbant, **caractérisé en ce que** les éléments absorbants (20) de chacun du premier ensemble absorbant (22) et du deuxième ensemble absorbant (24) étant réalisés à partir d'un même matériau ou d'une même combinaison de matériaux choisi(s) parmi le groupe de matériaux absorbant les neutrons constitué d'un premier hafnate d'europium, d'un deuxième hafnate d'europium, d'un premier hafnate de samarium, d'un deuxième hafnate de samarium, de carbure d'hafnium et d'hexaborure de samarium,
le premier hafnate d'europium et le deuxième hafnate d'europium étant deux composés définis formés par une réaction entre l'oxyde d'hafnium (HfO₂) et l'oxyde d'europium (Eu₂O₃) et possédant des compositions différentes,
le premier hafnate de samarium et le deuxième hafnate de samarium étant deux composés définis formés par une réaction entre l'oxyde d'hafnium (HfO₂) et l'oxyde de samarium (Sm₂O₃) et possédant des compositions différentes.

2. Grappe selon la revendication 1, dans laquelle le premier hafnate de samarium a une teneur molaire en oxyde de samarium comprise entre 8% et 20% et le deuxième hafnate de samarium a une teneur molaire en oxyde de samarium comprise entre 50% et 60%.

3. Grappe selon la revendication 1 ou 2, dans laquelle le premier hafnate d'europium a une teneur molaire en oxyde europium comprise entre 43% et 54% et le deuxième hafnate d'europium a une teneur molaire en oxyde europium comprise entre 19% et 26%.

4. Grappe selon l'une quelconque des revendications précédentes, dans laquelle les éléments absorbants (20) d'au moins un ensemble absorbant (22, 24, 26) sont réalisés à partir du premier hafnate d'europium et/ou du deuxième hafnate d'europium.

5. Grappe selon l'une quelconque des revendications précédentes, dans laquelle les éléments absorbants (20) du premier ensemble absorbant (22) sont réalisés exclusivement en premier hafnate de samarium, en deuxième hafnate de samarium, en premier hafnate d'europium et/ou en deuxième hafnate d'europium, et les éléments absorbants (20) du deuxième ensemble absorbant (24) sont réalisés exclusivement en carbure d'hafnium.

6. Grappe selon la revendication 5, dans laquelle les éléments absorbants (20) du premier ensemble absorbant (22) et les éléments absorbants (20) du deuxième ensemble absorbant (24) sont disposés dans des crayons absorbants distincts.

7. Grappe selon la revendication 6, comprenant autant de crayons absorbants (6) recevant des éléments absorbants (20) du premier ensemble absorbant (22) que de crayons absorbants (6) recevant les éléments absorbants (20) du deuxième ensemble absorbant (24).

8. Grappe selon l'une quelconque des revendications 5 à 7, dans laquelle des éléments absorbants (20) du premier ensemble absorbant (22) et des éléments absorbants (20) du deuxième ensemble absorbant (24) sont disposés dans des crayons absorbants distincts adjacents deux à deux.

9. Grappe selon l'une quelconque des revendications 5 à 8, comprenant exclusivement le premier ensemble absorbant (22) et le deuxième ensemble absorbant (24).

10. Grappe selon l'une quelconque des revendications 5 à 9, comprenant un troisième ensemble absorbant (26) comprenant des éléments absorbants (20) réalisés exclusivement en carbure de bore, en hexaborure de samarium, ou en premier hafnate d'europium et/ou en deuxième hafnate d'europium.

11. Grappe selon la revendication 10, dans laquelle les éléments absorbants (20) du troisième ensemble absorbant (26) sont disposés dans les crayons absorbants recevant les éléments absorbants (20) du premier ensemble absorbant (22) et du deuxième ensemble absorbant (24), de préférence dans la partie supérieure des crayons absorbants.

12. Grappe selon l'une quelconque des revendications précédentes, dans laquelle les éléments absorbants (20) d'au moins un parmi le premier ensemble absorbant (22) et le deuxième ensemble absorbant (24) contiennent plusieurs matériaux différents du groupe de matériaux et/ou les éléments absorbants (20) d'au moins un parmi le premier ensemble absorbant (22) et le deuxième ensemble absorbant (24) contiennent un seul matériau du groupe de matériaux.

13. Grappe selon l'une quelconque des revendications précédentes, comprenant au moins une colonne absorbante (18) contenant exclusivement des éléments absorbants (20) d'un même ensemble absorbant (22, 24, 26) et/ou au moins une colonne absorbante (18) contenant des éléments absorbants (20) d'au moins deux ensembles absorbants (22, 24, 26) distincts.

14. Grappe selon l'une quelconque des revendications précédentes, dans laquelle les éléments absorbants du premier ensemble absorbant (22) et du deuxième ensemble absorbant (24) sont réalisés à partir du même matériau ou de la même combinaison de matériaux du groupe de matériaux et diffèrent par la géométrie de leur section transversale et/ou un taux de porosité.

15. Grappe selon l'une quelconque des revendications précédentes, dans laquelle les éléments absorbants (20) d'au moins un ensemble absorbant (22, 24, 26) contiennent exclusivement le premier l'hafnate d'europium et/ou le deuxième hafnate d'europium.

16. Grappe selon l'une quelconque des revendications précédentes, dans laquelle au moins un ensemble absorbant (26) possède des éléments absorbants (20) possédant une structure en section transversale multicouche comprenant plusieurs couches chacune réalisées dans un matériau ou une combinaison de matériaux du groupe de matériaux, chaque élément absorbant (20) comprenant au moins deux couches de compositions distinctes et/ou de taux de porosité distincts.

17. Grappe selon l'une quelconque des revendications précédentes, comprenant au moins une colonne absorbante (18) contenant des éléments absorbants (20) du premier ensemble absorbant (22) et des éléments absorbants (20) du deuxième ensemble absorbant (24) répartis le long de la colonne absorbante (18) selon un motif répété.

18. Grappe selon l'une quelconque des revendications précédentes, dans laquelle le premier hafnate d'europium, le deuxième hafnate d'europium, le premier hafnate de samarium, le deuxième hafnate de samarium, le carbure d'hafnium et/ou l'hexaborure de samarium contenu(s) dans les éléments absorbants (20) du premier ensemble absorbant et du deuxième ensemble absorbant (22, 24) sont en phase cristalline cubique.

19. Crayon absorbant (6) pour réacteur nucléaire à eau sous pression, comprenant une gaine tubulaire (16) et une colonne absorbante (18) formée d'un empilement d'éléments absorbant les neutrons (20) reçus à l'intérieur de la gaine, la colonne absorbante (18) contenant au moins deux éléments absorbants (20), chaque élément absorbant (20) s'étendant suivant un axe longitudinal (A) et présentant une structure en section transversale déterminée par la géométrie en section transversale, la composition et le taux de porosité de l'élément absorbant (20), les éléments absorbants (20) différant par leurs structure en section transversale,
**caractérisé en ce que**
chaque élément absorbant (20) est réalisé en un matériau ou une combinaison de matériaux choisi(s) parmi le groupe de matériaux absorbant les neutrons constitué d'un premier hafnate d'europium, d'un deuxième hafnate d'europium, d'un premier hafnate de samarium, d'un deuxième hafnate de samarium, de carbure d'hafnium, et d'hexaborure de samarium, le premier hafnate d'europium et le deuxième hafnate d'europium étant deux composés définis formés par une réaction entre l'oxyde d'hafnium (HfO₂) et l'oxyde d'europium (Eu₂O₃) et possédant des compositions différentes, le premier hafnate de samarium et le deuxième hafnate de samarium étant deux composés définis formés par une réaction entre l'oxyde d'hafnium (HfO₂) et l'oxyde de samarium (Sm₂O₃) et possédant des compositions différentes.

## Patentansprüche

1. Absorbercluster (2) für einen Druckwasserkernreaktor, aufweisend ein Bündel von Absorberstäben (6), wobei jeder Absorberstab (6) eine rohrförmige Hülle (16) und eine Absorbersäule (18) aufweist, die aus einem Stapel von Neutronen absorbierenden Elementen (20) gebildet ist, die im Inneren der rohrförmigen Hülle (16) aufgenommen sind, wobei sich jedes absorbierende Element (20) entlang einer Längsachse (A) erstreckt und eine Querschnittsstruktur aufweist, die durch die Geometrie im Querschnitt, die Zusammensetzung und das Porositätsverhältnis des absorbierenden Elements (20) bestimmt ist, wobei die Absorbersäulen (18) mindestens zwei Absorbersätze (22, 24, 26) enthalten, wobei jeder Absorbersatz (22, 24, 26) aus einer Mehrzahl von absorbierenden Elementen (20) mit der gleichen Querschnittsstruktur gebildet ist,
wobei das Cluster mindestens einen ersten Absorbersatz (22) und einen zweiten Absorbersatz (24) aufweist, wobei die absorbierenden Elemente (20) des ersten Absorbersatzes (22) eine andere Querschnittsstruktur als die der absorbierenden Elemente (20) des zweiten Absorbersatzes haben,
**dadurch gekennzeichnet, dass** die absorbierenden Elemente (20) von jedem von dem ersten Absorbersatz (22) und dem zweiten Absorbersatz (24) aus dem gleichen Material oder einer gleichen Kombination von Materialien realisiert sind, die aus der Gruppe von neutronenabsorbierenden Materialien ausgewählt ist/sind, die aus einem ersten Europiumhafnat, einem zweiten Europiumhafnat, einem ersten Samariumhafnat, einem zweiten Samariumhafnat, Hafniumcarbid und Samariumhexaborid besteht,
wobei das erste Europiumhafnat und das zweite Europiumhafnat zwei definierte Verbindungen sind, die durch eine Reaktion zwischen Hafniumoxid (HfO₂) und Europiumoxid (EU₂O₃) gebildet werden und unterschiedliche Zusammensetzungen haben,
wobei das erste Samariumhafnat und das zweite Samariumhafnat zwei definierte Verbindungen sind, die durch eine Reaktion zwischen Hafniumoxid (HfO₂) und Samariumoxid (Sm₂O₃) gebildet werden und unterschiedliche Zusammensetzungen haben.

2. Cluster gemäß Anspruch 1, wobei das erste Samariumhafnat einen molaren Samariumoxidgehalt zwischen 8% und 20% hat und das zweite Samariumhafnat einen molaren Samariumoxidgehalt zwischen 50% und 60% hat.

3. Cluster gemäß Anspruch 1 oder 2, wobei das erste Europiumhafnat einen molaren Europiumoxidgehalt zwischen 43% und 54% hat und das zweite Europiumhafnat einen molaren Europiumoxidgehalt zwischen 19% und 26% hat.

4. Cluster gemäß irgendeinem der vorhergehenden Ansprüche, wobei die absorbierenden Elemente (20) mindestens eines Absorbersatzes (22, 24, 26) aus dem ersten Europiumhafnat und/oder dem zweiten Europiumhafnat realisiert sind.

5. Cluster gemäß irgendeinem der vorhergehenden Ansprüche, wobei die absorbierenden Elemente (20) des ersten Absorbersatzes (22) ausschließlich aus erstem Samariumhafnat, aus zweitem Samariumhafnat, aus erstem Europiumhafnat und/oder aus zweitem Europiumhafnat realisiert sind und die absorbierenden Elemente (20) des zweiten Absorbersatzes (24) ausschließlich aus Hafniumcarbid realisiert sind.

6. Cluster gemäß Anspruch 5, wobei die absorbierenden Elemente (20) des ersten Absorbersatzes (22) und die absorbierenden Elemente (20) des zweiten Absorbersatzes (24) in unterschiedlichen Absorberstäben angeordnet sind.

7. Cluster gemäß Anspruch 6, aufweisend ebenso viele Absorberstäbe (6), die absorbierende Elemente (20) des ersten Absorbersatzes (22) aufnehmen, wie Absorberstäbe (6), die die absorbierenden Elemente (20) des zweiten Absorbersatzes (24) aufnehmen.

8. Cluster gemäß irgendeinem der Ansprüche 5 bis 7, wobei absorbierende Elemente (20) des ersten Absorbersatzes (22) und absorbierende Elemente (20) des zweiten Absorbersatzes (24) in unterschiedlichen benachbarten Absorberstäben paarweise angeordnet sind.

9. Cluster gemäß irgendeinem der Ansprüche 5 bis 8, aufweisend ausschließlich den ersten Absorbersatz (22) und den zweiten Absorbersatz (24).

10. Cluster gemäß irgendeinem der Ansprüche 5 bis 9, aufweisend einen dritten Absorbersatz (26), aufweisend absorbierende Elemente (20), die ausschließlich aus Borcarbid, aus Samariumhexaborid oder aus erstem Europiumhafnat und/oder aus zweitem Europiumhafnat realisiert sind.

11. Cluster gemäß Anspruch 10, wobei die absorbierenden Elemente (20) des dritten Absorbersatzes (26) in den Absorberstäben angeordnet sind, die die absorbierenden Elemente (20) des ersten Absorbersatzes (22) und des zweiten Absorbersatzes (24) aufnehmen, vorzugsweise im oberen Teil der Absorberstäbe.

12. Cluster gemäß irgendeinem der vorhergehenden Ansprüche, wobei die absorbierenden Elemente (20) von mindestens einem aus dem ersten Absorbersatz (22) und dem zweiten Absorbersatz (24) mehrere unterschiedliche Materialien der Materialgruppe enthalten und/oder die absorbierenden Elemente (20) von mindestens einem aus dem ersten Absorbersatz (22) und dem zweiten Absorbersatz (24) ein einziges Material der Materialgruppe enthalten.

13. Cluster gemäß irgendeinem der vorhergehenden Ansprüche, aufweisend mindestens eine Absorbersäule (18), die ausschließlich absorbierende Elemente (20) eines gleichen Absorbersatzes (22, 24, 26) enthält, und/oder mindestens eine Absorbersäule (18), die absorbierende Elemente (20) von mindestens zwei verschiedenen Absorbersätzen (22, 24, 26) enthält.

14. Cluster gemäß irgendeinem der vorhergehenden Ansprüche, wobei die absorbierenden Elemente des ersten Absorbersatzes (22) und des zweiten Absorbersatzes (24) aus dem gleichen Material oder der gleichen Materialkombination der Materialgruppe realisiert sind und sich durch die Geometrie ihres Querschnitts und/oder ein Porositätsverhältnis unterscheiden.

15. Cluster gemäß irgendeinem der vorhergehenden Ansprüche, wobei die absorbierenden Elemente (20) mindestens eines Absorbersatzes (22, 24, 26) ausschließlich das erste Europiumhafnat und/oder das zweite Europiumhafnat enthalten.

16. Cluster gemäß irgendeinem der vorhergehenden Ansprüche, wobei mindestens ein Absorbersatz (26) absorbierende Elemente (20) mit einer mehrschichtigen Querschnittsstruktur aufweist, aufweisend mehrere Schichten, von denen jede aus einem Material oder einer Kombination von Materialien aus der Gruppe von Materialien realisiert ist, wobei jedes absorbierende Element (20) mindestens zwei Schichten mit unterschiedlichen Zusammensetzungen und/oder unterschiedlichen Porositätsverhältnissen aufweist.

17. Cluster gemäß irgendeinem der vorhergehenden Ansprüche, aufweisend mindestens eine Absorbersäule (18), die absorbierende Elemente (20) des ersten Absorbersatzes (22) und absorbierende Elemente (20) des zweiten Absorbersatzes (24) enthält, die entlang der Absorbersäule (18) gemäß einem wiederholten Muster verteilt sind.

18. Cluster gemäß irgendeinem der vorhergehenden Ansprüche, wobei das erste Europiumhafnat, das zweite Europiumhafnat, das erste Samariumhafnat, das zweite Samariumhafnat, das Hafniumcarbid und/oder das Samariumhexaborid, das/die in den absorbierenden Elementen (20) des ersten Absorbersatzes und des zweiten Absorbersatzes (22, 24) enthalten ist/sind, in einer kubischen Kristallphase vorliegen.

19. Absorberstab (6) für einen Druckwasserkernreaktor, aufweisend eine rohrförmigen Hülle (16) und eine Absorbersäule (18), die aus einem Stapel von neutronenabsorbierenden Elementen (20) gebildet ist, die im Inneren der Hülle aufgenommen sind, wobei die Absorbersäule (18) mindestens zwei absorbierende Elemente (20) enthält, wobei sich jedes absorbierende Element (20) entlang einer Längsachse (A) erstreckt und eine Querschnittsstruktur aufweist, die durch die Geometrie im Querschnitt, die Zusammensetzung und das Porositätsverhältnis des absorbierenden Elements (20) bestimmt ist, wobei sich die absorbierenden Elemente (20) durch ihre Querschnittsstruktur unterscheiden,
**dadurch gekennzeichnet, dass**
jedes absorbierende Element (20) aus einem Material oder einer Kombination von Materialien realisiert ist, das/die aus der Gruppe von neutronenabsorbierenden Materialien ausgewählt ist/sind, die aus einem ersten Europiumhafnat, einem zweiten Europiumhafnat, einem ersten Samariumhafnat, einem zweiten Samariumhafnat, Hafniumcarbid und Samariumhexaborid besteht, wobei das erste Europiumhafnat und das zweite Europiumhafnat zwei definierte Verbindungen sind, die durch eine Reaktion zwischen Hafniumoxid (HfO₂) und Europiumoxid (EU₂O₃) gebildet werden und unterschiedliche Zusammensetzungen haben, wobei das erste Samariumhafnat und das zweite Samariumhafnat zwei definierte Verbindungen sind, die durch eine Reaktion zwischen Hafniumoxid (HfO₂) und Samariumoxid (Sm₂O₃) gebildet werden und unterschiedliche Zusammensetzungen haben.

## Claims

1. Absorber cluster (2) for a pressurized water nuclear reactor, comprising a cluster of absorber rods (6), wherein each absorber rod (6) comprises a tubular sheath (16) and an absorber column (18) formed by a stack of neutron absorbing elements (20) received within the tubular sheath (16), wherein each absorber element (20) extends along a longitudinal axis (A) and has a cross-sectional structure determined by the cross-sectional geometry, the composition and porosity of the absorber element (20), wherein the absorber columns (18) contain at least two absorber assemblies (22, 24, 26) and each absorber assembly (22, 24, 26) consists of a plurality of absorber elements (20) having the same cross-sectional structure,
wherein the cluster comprises at least a first absorber assembly (22) and a second absorber assembly (24), the absorber elements (20) of the first absorber assembly (22) having a cross-sectional structure that is different from that of the absorber elements (20) of the second absorber assembly (24),
**characterized in that** the absorber elements (20) of the first absorber assembly (22) and the second absorber assembly (24) are formed from a same material or a same combination of materials selected from the group of neutron absorbing materials consisting of a first europium hafnate, a second europium hafnate, a first samarium hafnate, a second samarium hafnate, hafnium carbide and samarium hexaboride,
the first europium hafnate and the second europium hafnate being two defined compounds formed by a reaction between hafnium oxide (HfO₂) and europium oxide (Eu₂O₃) and having different compositions,
the first samarium hafnate and the second samarium hafnate being two defined compounds formed by a reaction between hafnium oxide (HfO₂) and samarium oxide (Sm₂O₃) and having different compositions.

2. Cluster according to claim 1, wherein the first samarium hafnate has a molar content of samarium oxide of between 8% and 20%, while the second samarium hafnate has a molar content of samarium oxide of between 50% and 60%.

3. Cluster according to claim 1 or 2, wherein the first europium hafnate has a molar content of europium oxide of between 43% and 54%, while the second europium hafnate has a molar content of europium oxide of between 19% and 26%.

4. Cluster according to any one of the preceding claims, wherein the absorber elements (20) of at least one absorber assembly (22, 24, 26) are made from the first europium hafnate and/or second hafnate europium.

5. Cluster according to any one of the preceding claims, wherein the absorber elements (20) of the first absorber assembly (22) are made exclusively of first samarium hafnate, second samarium hafnate, first europium hafnate and or second europium hafnate, while the absorber elements (20) of the second absorber assembly (24) are made exclusively of hafnium carbide.

6. Cluster according to claim 5, wherein the absorber elements (20) of the first absorber assembly (22) and the absorber elements (20) of the second absorber assembly (24) are disposed in distinct absorber rods.

7. Cluster according to claim 6, comprising as many absorber rods (6) receiving absorber elements (20) of the first absorber assembly (22) as absorber rods (6) receiving the absorber elements (20) of the second absorber assembly (24).

8. Cluster according to any one of claims 5 to 7, wherein absorber elements (20) of the first absorber assembly (22) and absorber elements (20) of the second absorber assembly (24) are arranged in distinct absorber rods which are adjacent in pairs.

9. Cluster according to any one of the claims 5 to 8, comprising exclusively the first absorber assembly (22) and the second absorber assembly (24).

10. Cluster according to any one of the claims 5 to 9, comprising a third absorber assembly (26) comprising absorber elements (20) made exclusively of boron carbide, samarium hexaboride, or first europium hafnate and/or second europium hafnate.

11. Cluster according to claim 10, wherein the absorber elements (20) of the third absorber assembly (26) are arranged in the absorber rods receiving the absorber elements (20) of the first absorber assembly (22) and the second absorber assembly (24), preferably in the upper part of the absorber rods.

12. Cluster according to any preceding claim, wherein the absorber elements (20) of at least one of the first absorber assembly (22) and the second absorber assembly (24) contain a plurality of different materials from among the group of materials and/or the absorber elements (20) of at least one of the first absorber assembly (22) and the second absorber assembly (24) contain a single material of the group of materials.

13. Cluster according to any one of the preceding claims, comprising at least one absorber column (18) exclusively containing absorber elements (20) of a same absorber assembly (22, 24, 26) and/or at least one column absorber element (18) containing absorber elements (20) of at least two distinct absorber assemblies (22, 24, 26).

14. Cluster according to any one of the preceding claims, wherein the absorber elements of the first absorber assembly (22) and the second absorber assembly (24) are made from the same material or the same combination of materials of the group of materials, and differ in the geometry of their cross-section and/or porosity rate.

15. Cluster according to any one of the preceding claims, wherein the absorber elements (20) of at least one absorber assembly (22, 24, 26) contain exclusively the first europium hafnate and/or the second europium hafnate.

16. Cluster according to any one of the preceding claims, wherein at least one absorber assembly (26) has absorber elements (20) having a multilayer cross-sectional structure comprising a plurality of layers each made of a material or a combination of materials from among the group of materials, wherein each absorber element (20) comprises at least two layers of distinct compositions and/or distinct porosity rates.

17. Cluster according to any one of the preceding claims, comprising at least one absorber column (18) containing absorber elements (20) of the first absorber assembly (22) and absorber elements (20) of the second absorber assembly (24) that are distributed along the absorber column (18) in a repeated pattern.

18. Cluster according to any one of the preceding claims, wherein the first europium hafnate, the second europium hafnate, the first samarium hafnate, the second samarium hafnate, the hafnium carbide and/or the samarium hexaboride contained in the absorber elements (20) of the first absorber assembly and the second absorber assembly (22, 24) are in cubic crystalline phase.

19. Absorber rod (6) for a pressurized water nuclear reactor, comprising a tubular sheath (16) and an absorber column (18) formed by a stack of neutron absorbing elements (20) received within the sheath, wherein the absorber column (18) contains at least two absorber elements (20), each absorber element (20) extending along a longitudinal axis (A) and having a cross-sectional structure determined by the cross-sectional geometry, the composition and porosity of the absorber element (20), wherein the absorber elements (20) differ in their cross-sectional structure, **characterized in that** each absorber element (20) is made of a material or a combination of materials selected from the group of neutron absorbing materials consisting of first europium hafnate, a second europium hafnate, a first samarium hafnate, a second samarium hafnate, hafnium carbide, and samarium hexaboride, the first europium hafnate and the second europium hafnate being two defined compounds formed by a reaction between hafnium oxide (HfO₂) and europium oxide (Eu₂O₃) and having different compositions, the first samarium hafnate and the second samarium hafnate being two defined compounds formed by a reaction between hafnium oxide (HfO₂) and samarium oxide (Sm₂O₃) and having different compositions.
